(19) Europäisches Patentamt
European Patent Office
Office européen des brevets

(11) **EP 4 078 164 B1**

(12) **EUROPÄISCHE PATENTSCHRIFT**

(45) Veröffentlichungstag und Bekanntmachung des Hinweises auf die Patenterteilung:
**05.02.2025 Patentblatt 2025/06**

(21) Anmeldenummer: **20817287.4**

(22) Anmeldetag: **01.12.2020**

(51) Internationale Patentklassifikation (IPC):
**G01N 29/44** (2006.01)    **G01N 29/024** (2006.01)
**G01F 15/02** (2006.01)    **G01N 29/036** (2006.01)
**G01F 1/74** (2006.01)

(52) Gemeinsame Patentklassifikation (CPC):
**G01N 29/024; G01F 1/74; G01F 1/8436; G01F 15/024; G01N 29/036; G01N 29/4472;** G01N 2291/02433

(86) Internationale Anmeldenummer:
**PCT/EP2020/084083**

(87) Internationale Veröffentlichungsnummer:
**WO 2021/121961 (24.06.2021 Gazette 2021/25)**

(54) **VERFAHREN ZUR CHARAKTERISIERUNG DER GASBELADUNG EINES MEDIUMS**

METHOD FOR CHARACTERIZING THE GAS LOAD OF A MEDIUM

PROCÉDÉ POUR LA CARACTÉRISATION DE LA CHARGE DE GAZ D'UN MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2019 DE 102019135299**

(43) Veröffentlichungstag der Anmeldung:
**26.10.2022 Patentblatt 2022/43**

(73) Patentinhaber: **Endress+Hauser Flowtec AG 4153 Reinach (CH)**

(72) Erfinder:
• **ZHU, Hao**
**85354 Freising (DE)**

• **LIN, Yaoying**
**85356 Freising (DE)**
• **GÜTTLER, Andreas**
**85406 Zolling (DE)**

(74) Vertreter: **Hahn, Christian
Endress+Hauser Group Services (Deutschland)AG +Co. KG
Colmarer Straße 6
79576 Weil am Rhein (DE)**

(56) Entgegenhaltungen:
DE-A1- 102016 114 972    DE-A1- 102016 114 974
DE-A1- 102017 131 267    DE-A1- 102018 112 002

EP 4 078 164 B1

## Beschreibung

Die vorliegende Erfindung betrifft ein Verfahren zur Charakterisierung der Gasbeladung eines Mediums, welches eine mit Gas beladene Flüssigkeit umfasst.

DE 10 2018 112 002 A1 offenbart ein Verfahren zur Korrektur des Einflusses von Frequenzfluktuationen bei der Bestimmung der Dichte bzw. der Viskosität eines Mediums mit einem vibronischen Messgerät. DE 10 2016 114 974 A1 und DE 10 2016 114 972 A1 offenbaren Verfahren zum Bestimmen des Gasvolumenanteils eines mit Gas beladenen flüssigen Mediums mittels eines Messaufnehmers vom Vibrationstyp auf Basis der Eigenfrequenz zweier Schwingungsmoden unter Berücksichtigung des Resonator Effekts und unter Verwendung der Sorokin-Gleichung. Es ist auch aus der Offenlegungsschrift DE 10 2017 131 267 A1 bekannt, die Gasbeladung einer Flüssigkeit auf Basis des Resonatoreffekts und der Sorokin-Gleichung zu ermitteln. Dies auf diese Weise ermittelte Gasbeladung lässt jedoch insofern zu wünschen übrig, als einerseits suspendierte und andererseits freie Blasen in Flüssigkeiten auftreten, die sich unterschiedlich auf die Messung von Parametern des Mediums, wie z.B. dessen Dichte oder Durchflussrate auswirken. Es ist daher Aufgabe der vorliegenden Erfindung, ein Verfahren bereitzustellen, welches eine differenziertere Charakterisierung der Gasbeladung eines Mediums ermöglicht.

Die Aufgabe wird erfindungsgemäß gelöst durch das Verfahren gemäß dem unabhängigen Patentanspruch 1.

Das erfindungsgemäße Verfahren dient zur Charakterisierung der Gasbeladung eines Mediums, welches eine mit Gas beladene Flüssigkeit umfasst, mittels eines Messaufnehmers, der das Medium in mindestens einem vibrierenden Messrohr führt, wobei das Verfahren umfasst:

Ermitteln eines Schallgeschwindigkeitswerts und eines Resonatordichtewerts des Mediums auf Basis der Eigenfrequenzen mindestens zweier unterschiedlicher Schwingungsmoden des Messrohrs;

Ermitteln eines Druckmesswerts für das im Messrohr geführte Medium und der Eigenfrequenzen mindestens zweier unterschiedlicher Schwingungsmoden des Messrohrs;

Ermitteln eines Schallgeschwindigkeitswerts und eines Resonatordichtewerts des Mediums auf Basis der Eigenfrequenzen der mindestens zwei unterschiedlichen Schwingungsmoden des mindestens einen Messrohrs;

Ermitteln eines Werts für den Gasvolumenanteil freier Blasen in Abhängigkeit von dem Resonatordichtewert des Mediums, und von dem Gasvolumenanteil suspendierter Blasen,

wobei der Wert für den Gasvolumenanteil freier Blasen proportional ist zu einer Differenz zwischen einem Erwartungswert der Mediendichte auf Basis eines Referenzdichtewerts der Flüssigkeit und des Gasvolumenanteils der suspendierten Blasen einerseits und des Resonatordichtewerts andererseits, wobei zur Ermittlung des Werts für den Gasvolumenanteil freier Blasen besagte Differenz geteilt wir durch ein Produkt aus dem Erwartungswert der Mediendichte auf Basis des Referenzdichtewerts der Flüssigkeit und des Gasvolumenanteils der suspendierten Blasen einerseits sowie einem Korrekturfaktor andererseits, wobei der Korrekturfaktor nicht kleiner als 1 und nicht größer als 4, insbesondere nicht größer als 3 ist.

In einer Weiterbildung der Erfindung hängt der Korrekturfaktor von der erwarteten Beweglichkeit und/oder der Stokes-Zahl der freien Blasen in der Flüssigkeit ab.

In einer Weiterbildung der Erfindung weist der Korrekturfaktor den Wert 2 auf.

In einer Weiterbildung der Erfindung erfolgt die Ermittlung des Gasvolumenanteils der suspendierten Blasen auf Basis der Sorokin-Gleichung.

In einer Weiterbildung der Erfindung erfolgt die Ermittlung des Resonatordichtewerts auf Basis der Eigenfrequenzen der F1-Biegeschwingungsmode und der F2-Biegeschwingungsmode oder der F3 Biegeschwingungsmode.

In einer Weiterbildung der Erfindung weist der Messaufnehmer mindestens zwei unterschiedliche Messrohre auf, bei denen gleichartige Biegeschwingungsmoden unterschiedliche Eigenfrequenzen aufweisen, wobei die Ermittlung des Resonatordichtewerts auf Basis der unterschiedlichen Eigenfrequenzen zweier gleichartiger Biegeschwingungsmoden, insbesondere der beiden F1-Biegeschwingungsmoden der unterschiedlichen Messrohre erfolgt.

In einer Weiterbildung der Erfindung wird ein Mischphasendichtewert für das Medium ermittelt als Funktion des Gasvolumenanteils suspendierter Blasen und des Gasvolumenanteils freier Blasen.

In einer Weiterbildung der Erfindung wird das Verfahren zumindest teilweise iterativ durchgeführt, wobei in einer zweiten Iteration der ermittelte Mischphasendichtewert, anstelle des Resonatordichtewerts zum Ermitteln des Gasvolumenanteils suspendierter Blasen verwendet wird.

In einer Weiterbildung der Erfindung wird mindestens einer der folgenden Werte als Messwerte bereitgestellt ausgegeben: der Mischphasendichtewert, der Gasvolumenanteil freier Blasen, der Gasvolumenanteil suspendierter

2

Blasen, und die Summe der vorgenannten Gasvolumenanteile.

Ein Beispiel für ein Dichtemessgerät zur Durchführung des Verfahrens umfasst:

einen Messaufnehmer mit mindestens einem zu Schwingungen anregbaren Messrohr zum Führen eines fließfähigen Mediums;
einem Erreger zum Anregen der Schwingungen;
mindestens einem Schwingungssensor zum Erfassen von schwingungsabhängigen Signalen; und
eine Mess- und Betriebsschaltung die Eingerichtet ist zum Treiben des Erregers, zum Erfassen der schwingungsabhängigen Signale und zum Durchführen des erfindungsgemäßen Verfahrens.

In einer Weiterbildung ist das mindestens eine Messrohr ein Messrohr eines Paars von im wesentlichen gleichen Messrohren, die zu Schwingungen gegeneinander anregbar sind.

Die Erfindung wird nun anhand des in den Zeichnungen illustrierten Ausführungsbeispiels näher erläutert. Es zeigt:

Fig. 1: ein Flussdiagramm eines Ausführungsbeispiels des erfindungsgemäßen Verfahrens;
Fig. 2a: mit dem erfindungsgemäßen Verfahren gewonnene Messdaten zu Gasvolumenanteilen; und
Fig. 2b: eine zugehörige Dichtebestimmung nach dem Stand der Technik und nach dem erfindungsgemäßen Verfahren.

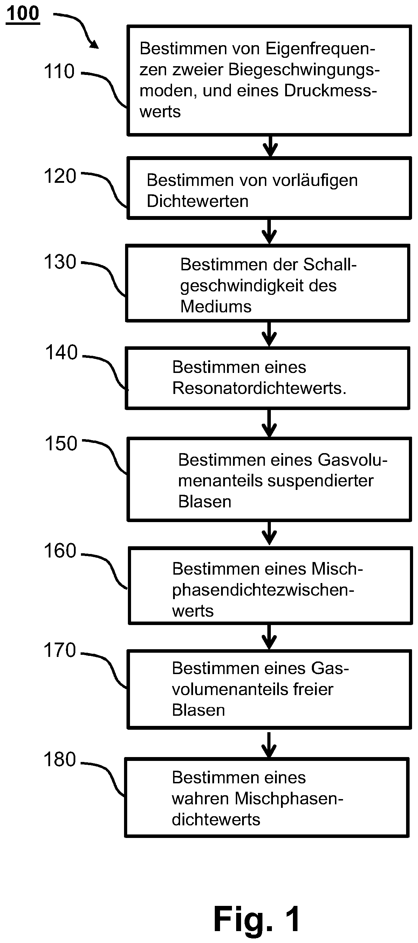

Das in Fig. 1 dargestellte Ausführungsbeispiel eines erfindungsgemäßen Verfahrens 100 zur Charakterisierung einer mit Gas beladenen Flüssigkeit beginnt in einem Schritt 110 mit der Bestimmung der Eigenfrequenzen der $f_1$-Biegeschwingungsmode und der $f_3$-Biegeschwingungsmode eines Messrohrpaares eines Coriolis-Massedurchflussmessaufnehmers, der hier insbesondere als Dichtemessaufnehmer dient Hierzu können die $f_1$-Biegeschwingungsmode und die $f_3$-Biegeschwingungsmode insbesondere gleichzeitig angeregt werden. Durch Maximieren des Verhältnisses von der Schwingungsamplitude zur modenspezifischen Erregerleistung durch Variieren der Anregungsfrequenzen können die gesuchten Eigenfrequenzen ermittelt werden. Weiterhin wird ein zum Zeitpunkt der Frequenzmessung gültiger Druckmesswert p erfasst.

Anhand der ermittelten Eigenfrequenzen fi werden in einem Schritt 120 vorläufige Dichtewerte $\rho_1$ und $\rho_3$ bestimmt als:

$$\rho_i = c_{0i} + c_{1i}\frac{1}{f_i^2} + c_{2i}\frac{1}{f_i^4}\,, \qquad \text{(i)}$$

wobei $c_{0i}$, $c_{1i}$, und $c_{2i}$, modenabhängige Koeffizienten sind.

In einem Schritt 130, der weiter unten näher erläutert wird, erfolgt die Bestimmung der Schallgeschwindigkeit der mit Gas beladenen Flüssigkeit und eines modenspezifischen Resonatorkorrekturterms $K_{res-i}$ für die Dichtemessung.

Anschließend wird in einem Schritt 140 mittels der Schallgeschwindigkeit $c_{res}$ ein Resonatordichtewert $\rho_{res}$ für die mit Gas beladene Flüssigkeit ermittelt.

Unter Zuhilfenahme des aktuellen Druckmesswerts p für die mit Gas beladene Flüssigkeit, deren Schallgeschwindigkeit $c_{res}$ und des Resonatordichtewert $\rho_{res}$ wird in einem Schritt 150 ein Gasvolumenanteil suspendierter Blasen $\alpha_{susp}$ bestimmt.

Auf Basis des Gasvolumentanteils suspendierter Blasen $\alpha_{susp}$ lässt sich bei Kenntnis der Dichte der reinen flüssigen Phase $\rho_l$ in einem nächsten Schritt 160 ein Mischphasendichtezwischenwert $\rho_{l-susp}$ für die Dichte der mit Gas beladene Flüssigkeit bestimmen.

$$\rho_{l-susp} = \rho_l * \left(1 - \alpha_{susp}\right) \qquad \text{(ii)}$$

Anhand einer Differenz zwischen dem Mischphasendichtezwischenwert $\rho_{l-susp}$ *und dem* Resonatordichtewert $\rho_{res}$ kann für $\rho_{res} < \rho_{l-susp}$ im nächsten Schritt 170 der Gasvolumenanteil $\alpha_{free}$ freier Blasen berechnet werden gemäß:

$$\alpha_{free} = \frac{\rho_{l-susp}-\rho_{res}}{k_{gas}*\rho_{l-susp}} \qquad \text{(iii)}$$

Hierbei ist $k_{gas}$ ein Korrekturfaktor mit einem Wert zwischen 1 und 3, welcher von der Stokes-Zahl der Gasblasen abhängt, und für die meisten Fälle mit 2 gut abgeschätzt ist.

Für $\rho_{res} > \rho_{l\text{-}susp}$ gilt: $\alpha_{free} = 0$.

Für einen wahren Mischphasendichtewert $\rho_{mix}$ erhält man damit in einem Folgeschritt 180:

$$\rho_{mix} = \rho_l * \left(1 - \alpha_{susp} - \alpha_{free}\right) \qquad \text{(iv)}$$

Neben diesem Mischphasendichtewert können die einzelnen Gasvolumenteile $\alpha_{susp}$ und $\alpha_{free}$ sowie deren Summe als Wert für den gesamten Gasvolumenanteil $\alpha_{total}$ ausgegeben werden. Auf Basis dieser Gasvolumenanteile und einer Durchflussgröße kann beispielsweise das Durchflussregime in einem strömenden Medium charakterisiert werden.

Im Folgenden werden Einzelheiten zu den Verfahrensschritten erläutert:
Zur Ermittlung des Resonatorkorrekturterms $K_{res\text{-}i}$ zum Berechnen eines Resonatordichtewertes $\rho_{res}$ erfolgt zunächst das Berechnen des Verhältnisses V der vorläufigen Dichtewerte, also beispielsweise die Division der vorläufigen Dichtewerte $\rho_1$ und $\rho_3$ zu

$$V := \rho_1 / \rho_3.$$

Anschließend wird ein Wert der Schallgeschwindigkeit $c_{res}$ bestimmt, welcher mit den gemessenen Eigenfrequenzen $f_1$ und $f_3$ der Biegeschwingungsmoden in der folgenden Gleichung zu dem beobachteten Verhältnis V der vorläufigen Dichtewerte führt:

$$\frac{\left(1 + \dfrac{r}{\left(\frac{g \cdot c_{res}}{f_1}\right)^2 - b}\right)}{\left(1 + \dfrac{r}{\left(\frac{g \cdot c_{res}}{f_3}\right)^2 - b}\right)} = V \qquad \text{(v)}$$

wobei r etwa 0,84, b=1 und g ein messrohrabhängiger Proportionalitätsfaktor zwischen Schallgeschwindigkeit $c_{res}$ und Resonanzfrequenz ist, der beispielsweise einen Wert von 10/m annehmen kann. Der Wert der Schallgeschwindigkeit $c_{res}$, welcher die obige Gleichung erfüllt, ist der gesuchte Wert für die Schallgeschwindigkeit der mit Gas beladenen Flüssigkeit.

Anhand des ermittelten Schallgeschwindigkeitswerts $c_{res}$ kann dann ein modenspezifischer Korrekturterm $K_{res\text{-}i}$ für den Resonatoreffekt berechnet gemäß:

$$K_{res-i} := \left(1 + \frac{r}{\left(\frac{g \cdot c_{res}}{f_i}\right)^2 - 1}\right) \qquad \text{(vi)}$$

Der Resonatordichtewert $\rho_{res}$ kann im nächsten Schritt 140 berechnet werden als:

$$\rho_{res} := \frac{\rho_i}{K_{res-i}} \qquad \text{(vii)}$$

Weiterhin besteht nach Sorokin zwischen der Schallgeschwindigkeit $c_{mix}$ einer mit Gas beladenen Flüssigkeit und weiteren Parametern der folgende Zusammenhang:

$$c_{S-mix} = \left[\frac{\alpha_s}{c_g{}^2} + \frac{(1-\alpha_s)^2}{c_l{}^2} + \frac{\alpha_s(1-\alpha_s) \cdot \rho_l}{\gamma \cdot p}\right]^{-\frac{1}{2}} \qquad \text{(viii)}$$

Hierbei sind $\alpha_s$ ein Gasvolumenanteil (oder die Gas Void Fraction GVF), $c_g$ die Schallgeschwindigkeit des reinen Gases, $c_l$ die Schallgeschwindigkeit der reinen Flüssigkeit, $\gamma$ der Adiabatenkoeffizient für das Gas, p der aktuelle Druck der mit Gas beladenen Flüssigkeit und $\rho_l$ die Dichte der reinen Flüssigkeit.

Der Mischungsdichtewert nach Sorokin ist $\rho_{S\text{-}mix}$ ist mit der Dichte der flüssigen Phase $\rho_l$ und der Gasdichte über den Gasvolumenanteil $\alpha$ verknüpft durch:

$$\rho_{S-mix} = \rho_l(1 - \alpha_s) + \rho_g\alpha_s \quad \text{(ix)}$$

Da die Flüssigkeitsdichte wesentlich größer ist als die Gasdichte und da der Gasvolumenanteil meist im einstelligen Prozentbereich liegt, gilt die folgende Näherung:

$$\rho_{S-mix} \approx \rho_l(1 - \alpha_s) \quad \text{(x)}$$

Damit kann Gleichung (viii) umgeschrieben werden als:

$$c_{S-mix} = \left[\frac{\alpha_s}{c_g^2} + \frac{(1-\alpha_s)^2}{c_l^2} + \frac{\alpha_s\rho_{S-mix}}{\gamma p}\right]^{-\frac{1}{2}} \quad \text{(xi)}$$

Durch Vernachlässigen quadratischer Terme in $\alpha$ erhält man:

$$c_{S-mix} = \left[\frac{\alpha}{c_g^2} + \frac{1-2\alpha_s}{c_l^2} + \frac{\alpha_s\rho_{S-mix}}{\gamma p}\right]^{-\frac{1}{2}} \quad \text{(xii)}$$

Durch Auflösen von Gleichung xii nach $\alpha_s$ ist ein Ausdruck zur Berechnung des Gasvolumenanteils nach Sorokin gefunden:

$$\alpha_s = \frac{\frac{1}{c_{S-mix}^2} - \frac{1}{c_l^2}}{\frac{1}{c_g^2} - \frac{2}{c_l^2} + \frac{\rho_{S-mix}}{\gamma P}} \quad \text{(xiii)}$$

Unter Vernachlässigung der Terme mit $(1/c_l)^2$ und $(1/c_g)^2$, was für Druckwerte bis zu einigen Bar gerechtfertigt ist, erhält man einen Wert für den Gasvolumenanteil $\alpha$ mit einer relativen Genauigkeit im unteren einstelligen Prozentbereich:

$$\alpha_s = \frac{\gamma p}{c_{S-mix}^2 \rho_{S-mix}} \quad \text{(xiv)}$$

Setzt man in Gleichung xiii oder xiv die mit Gleichung v gefundene Schallgeschwindigkeit $c_{res}$ für die Mischungsschallgeschwindigkeit $c_{S-mix}$ und die mit Gleichung vii bestimmten Resonatordichtewert $\rho_{res}$ für den Mischungsdichtewert $\rho_{S-mix}$ nach Sorokin ein so entspricht der Gasvolumenanteil $\alpha_s$ nach Sorokin dem Gasvolumenanteil $\alpha_{susp}$ suspendierter Blasen, der in Gleichungen ii und iv eingesetzt wird.

In einer zweiten Iteration kann in Gleichung xiii oder xiv der in einer ersten Iteration mit Gleichung iv gefundene wahre Mischphasendichtewert $\rho_{mix}$ anstelle des Resonatordichtewerts $\rho_{res}$ für den Mischungsdichtewert $\rho_{S-mix}$ nach Sorokin eingesetzt werden. Der damit gefundene Gasvolumenanteil $\alpha_s$ nach Sorokin wird wiederum Gasvolumenanteil $\alpha_{susp}$ suspendierter Blasen in Gleichungen ii eingesetzt um einen neuen Mischphasendichtezwischenwert $\rho_{l-susp}$ der dann in Gleichung iii eingeht, um einen zweiten Wert für den Gasvolumenanteil freier Blasen zu ermitteln. Die so iterativ ermittelten Werte für die Gasvolumenanteile werden dann in Gleichung iv eingesetzt um einen zweiten wahre Mischphasendichtewert $\rho_{mix}$ zu erhalten. Ggf. kann diese Iteration fortgesetzt werden, bis ein Konvergenzkriterium erfüllt ist. Erfahrungsgemäß ist jedoch bereits eine Iteration völlig ausreichend.

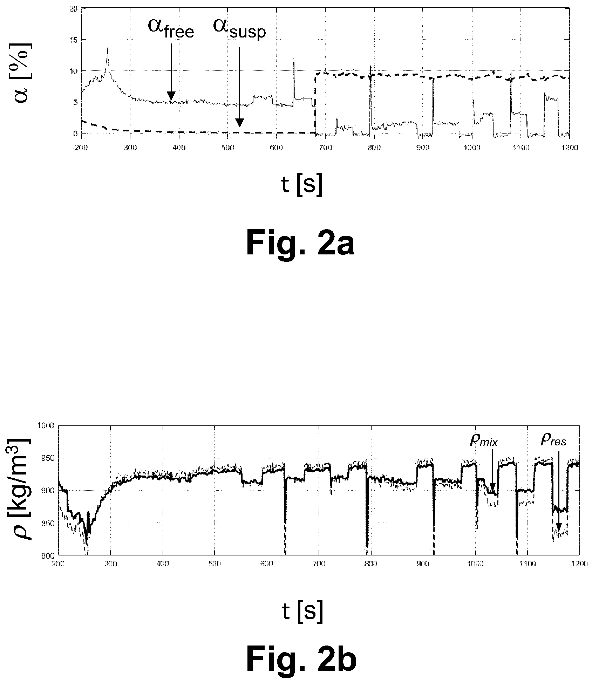

Das Diagramm in Fig. 2a zeigt mit dem erfindungsgemäßen Verfahren erhobenen Messdaten zu den Gasvolumenanteilen von Gummiarabikum in das Luft eingebracht wurde. Die gestrichelte Linie zeigt den Gasvolumenanteil $\alpha_s$ suspendierter Blase, während die durchgezogene Linie den Gasvolumenanteil $\alpha_{free}$ freier Blasen darstellt. Je nach Art des Einbringens wechseln die verschiedenen Gasvolumenanteilen deutlich. Das erfindungsgemäße Verfahren ist in der Lage zwischen den beiden Arten der Gasbeladung zu unterscheiden, und für die jeweiligen Gasvolumenanteile genaue Messwerte zu generieren. Das Diagramm in Fig. 2b zeigt die gemäß Gleichung vii nach dem Stand der Technik resultierenden Resonatordichtewerte $\rho_{res}$ mit einer gestrichelten Linie und die erfindungsgemäß gemäß Gleichung iv Mischphasendichtewerte $\rho_{mix}$ mit einer durchgezogenen Linie. Die erfindungsgemäße Bestimmung der Mischphasendichte erweist sich als überlegen bei der Bestimmung der Dichte, wenn unterschiedliche Arten der Gasbeladung gegeben sind.

**Patentansprüche**

1. Verfahren (100) zur Charakterisierung der Gasbeladung eines Mediums, welches eine mit Gas beladene Flüssigkeit umfasst, mittels eines Messaufnehmers, der das Medium in mindestens einem vibrierenden Messrohr führt, wobei das Verfahren umfasst:

   Ermitteln eines Druckmesswerts (110) für das im Messrohr geführte Medium und der Eigenfrequenzen mindestens zweier unterschiedlicher Schwingungsmoden des Messrohrs;
   Ermitteln eines Schallgeschwindigkeitswerts (130) und eines Resonatordichtewerts (140) des Mediums auf Basis der Eigenfrequenzen der mindestens zwei unterschiedlichen Schwingungsmoden des mindestens einen Messrohrs;
   Ermitteln eines Gasvolumenanteils (150) suspendierter Blasen im Medium auf Basis des Resonatordichtewerts, des Schallgeschwindigkeitswerts und des Druckmesswerts;
   Ermitteln eines Werts für den Gasvolumenanteil (170) freier Blasen in Abhängigkeit von dem Resonatordichtewert des Mediums, und von dem Gasvolumenanteil suspendierter Blasen,
   wobei der Wert für den Gasvolumenanteil freier Blasen proportional ist zu einer Differenz zwischen einem Erwartungswert der Mediendichte auf Basis eines Referenzdichtewerts der Flüssigkeit und des Gasvolumenanteils der suspendierten Blasen einerseits und des Resonatordichtewerts andererseits,
   wobei zur Ermittlung des Werts für den Gasvolumenanteil freier Blasen besagte Differenz geteilt wird durch ein Produkt aus dem Erwartungswert der Mediendichte auf Basis des Referenzdichtewerts der Flüssigkeit und des Gasvolumenanteils der suspendierten Blasen einerseits sowie einem Korrekturfaktor andererseits, wobei der Korrekturfaktor nicht kleiner als 1 und nicht größer als 4, insbesondere nicht größer als 3 ist.

2. Verfahren nach Anspruch 1, wobei der Korrekturfaktor von der erwarteten Beweglichkeit und/oder der Stokes-Zahl der freien Blasen in der Flüssigkeit abhängt.

3. Verfahren nach Anspruch 1 oder 2, wobei der Korrekturfaktor den Wert 2 aufweist.

4. Verfahren nach einem der vorhergehenden Ansprüche, wobei die Ermittlung des Gasvolumenanteils der suspendierten Blasen auf Basis der Sorokin-Gleichung erfolgt, wonach zwischen der Schallgeschwindigkeit $c_{S-mix}$ einer mit Gas beladenen Flüssigkeit und weiteren Parametem der folgende Zusammenhang besteht:

$$c_{S-mix} = \left[ \frac{\alpha_s}{c_g{}^2} + \frac{(1-\alpha_s)^2}{c_l{}^2} + \frac{\alpha_s(1-\alpha_s)\cdot\rho_l}{\gamma\cdot p} \right]^{-\frac{1}{2}},$$

wobei $\alpha_s$ ein Gasvolumenanteil, $c_g$ die Schallgeschwindigkeit des reinen Gases, $c_l$ die Schallgeschwindigkeit der reinen Flüssigkeit, $\gamma$ der Adiabatenkoeffizient für das Gas, p der aktuelle Druck der mit Gas beladenen Flüssigkeit und $\rho_l$ die Dichte der reinen Flüssigkeit sind.

5. Verfahren nach einem der vorhergehenden Ansprüche, wobei die Ermittlung des Resonatordichtewerts auf Basis der Eigenfrequenzen der F1-Biegeschwingungsmode und der F2- Biegeschwingungsmode oder der F3 Biegeschwingungsmode erfolgt.

6. Verfahren nach einem der vorhergehenden Ansprüche, wobei der Messaufnehmer mindestens zwei unterschiedliche Messrohre aufweist, bei denen gleichartige Biegeschwingungsmoden unterschiedliche Eigenfrequenzen aufweisen, wobei die Ermittlung des Resonatordichtewerts auf Basis der unterschiedlichen Eigenfrequenzen zweier gleichartiger Biegeschwingungsmoden, insbesondere der beiden F1-Biegeschwingungsmoden der unterschiedlichen Messrohre erfolgt.

7. Verfahren nach einem der vorhergehenden Ansprüche, wobei ein Mischphasendichtewert für das Medium ermittelt wird als Funktion des Volumenanteils suspendierter Blasen und des Gasvolumenanteils freier Blasen.

8. Verfahren nach Anspruch 7, wobei das Verfahren zumindest teilweise iterativ durchgeführt wird, wobei in einer zweiten Iteration der ermittelte Mischphasedichtewert, anstelle des Resonatordichtewerts zum Ermitteln des Gasvolumenanteils suspendierter Blasen verwendet wird.

9. Verfahren nach einem der vorhergehenden Ansprüche wobei mindestens einer der folgenden Werte als Messwerte bereitgestellt ausgegeben werden: der Mischphasendichtewert, der Gasvolumenanteil freier Blasen, der Gasvolumenanteil suspendierter Blasen, und die Summe der vorgenannten Gasvolumenanteile.

**Claims**

1.   A method (100) for characterizing the gas content of a medium that comprises a gas-charged liquid, using a measuring sensor that conveys the medium in at least one vibrating measuring tube, wherein the method comprises:

   Identification of a measured pressure value (110) for the medium being conveyed in the measuring tube and of the resonant frequencies of at least two different vibrational modes of the measuring tube;
   Identification of an acoustic velocity value (130) and a resonator density value (140) of the medium on the basis of the resonant frequencies of the at least two different vibrational modes of the at least one measuring tube;
   Identification of a gas volume content (150) of suspended bubbles in the medium on the basis of the resonator density value, of the acoustic velocity value, and of the measured pressure value;
   Identification of a value for the gas volume content (170) of free bubbles on the basis of the resonator density value of the medium, and of the gas volume content of suspended bubbles, wherein the value for the gas volume content of free bubbles is proportional to a difference between an expected value of the media density on the basis of a reference density value of the liquid and of the gas volume content of the suspended bubbles on the one hand, and of the resonator density value on the other,
   wherein, in order to determine the value for the gas volume content of free bubbles, said difference is divided by a product of the expected media density value on the basis of the reference density value of the liquid and of the gas volume content of suspended bubbles on the one hand, as well as a correction factor on the other, wherein the correction factor is not smaller than 1 and not greater than 4, in particular not greater than 3.

2.   A method according to claim 1, wherein the correction factor is dependent on the expected mobility and/or the Stokes number of free bubbles in the liquid.

3.   A method according to claim 1 or 2, wherein the correction factor exhibits the value 2.

4.   A method according to one of the preceding claims, wherein the gas volume content of suspended bubbles is determined on the basis of the Sorokin equation, according to which the following relationship is in place between the sound velocity $c_{S\text{-mix}}$ of a gas-charged liquid and further parameters:

$$c_{S-mix} = \left[\frac{\alpha_s}{c_g^2} + \frac{(1-\alpha_s)^2}{c_l^2} + \frac{\alpha_s(1-\alpha_s)\cdot\rho_l}{\gamma\cdot p}\right]^{-\frac{1}{2}},$$

   wherein $\alpha s$ represents the gas volume content, $c_g$ the sound velocity of the pure gas, $c_i$ the sound velocity of the pure liquid, $\gamma$ the adiabatic coefficient for the gas, p the current pressure of the gas-charged liquid, and p the density of the pure liquid.

5.   A method according to one of the preceding claims, wherein the resonator density value is determined on the basis of the resonant frequencies of the F1 bending vibrational mode and the F2 bending vibrational mode, or the F3 bending vibrational mode.

6.   A method according to one of the preceding claims, wherein the measuring sensor exhibits at least two different measuring tubes, wherein the same bending vibrational modes exhibit different resonant frequencies, wherein the resonator density value is determined on the basis of the different resonant frequencies of two identical bending vibrational modes, in particular the two F1 bending vibrational modes of the different measuring tubes.

7.   A method according to one of the preceding claims, wherein a mixed phase density value is determined for the medium as a function of the volume fraction of suspended bubbles and of the gas volume content of free bubbles.

8.   A method according to claim 7, wherein the method is carried out at least in part iteratively, wherein in a second iteration the determined mixed phase density value is used in place of the resonator density value in order to determine the gas volume content of suspended bubbles.

9. A method according to one of the preceding claims, wherein at least one of the following values is output and provided as a measured value: the mixed phase density value, the gas volume content of free bubbles, the gas volume content of suspended bubbles, and the total of all these gas volume contents.

**Revendications**

1. Procédé (100) destiné à la caractérisation de la charge en gaz d'un fluide, lequel comprend un liquide chargé en gaz, au moyen d'un capteur guidant le fluide dans au moins un tube de mesure vibrant, lequel procédé comprend les étapes suivantes :

   Détermination d'une valeur mesurée de pression (110) pour le fluide guidé dans le tube de mesure et des fréquences propres d'au moins deux modes de vibration différents du tube de mesure ;
   Détermination d'une valeur de vitesse du son (130) et d'une valeur de densité de résonateur (140) du fluide sur la base des fréquences propres des au moins deux modes de vibration différents de l'au moins un tube de mesure ;
   Détermination d'une fraction volumique de gaz (150) de bulles en suspension dans le fluide sur la base de la valeur de densité de résonateur, de la valeur de vitesse du son et de la valeur mesurée de pression ;
   Détermination d'une valeur pour la fraction volumique de gaz (170) de bulles libres en fonction de la valeur de densité de résonateur du fluide, et de la fraction volumique de gaz de bulles en suspension,
   la valeur de la fraction volumique de gaz des bulles libres étant proportionnelle à une différence entre une valeur attendue de la densité du fluide sur la base d'une valeur de densité de référence du liquide et de la fraction volumique de gaz des bulles en suspension, d'une part, et la valeur de densité de résonateur, d'autre part, procédé pour lequel, pour déterminer la valeur de la fraction volumique de gaz des bulles libres, ladite différence est divisée par un produit de la valeur attendue de la densité du fluide sur la base de la valeur de densité de référence du liquide et de la fraction volumique de gaz des bulles en suspension, d'une part, et d'un facteur de correction, d'autre part, le facteur de correction n'étant pas inférieur à 1 et pas supérieur à 4, notamment pas supérieur à 3.

2. Procédé selon la revendication 1, pour lequel le facteur de correction dépend de la mobilité attendue et/ou du nombre de Stokes des bulles libres dans le liquide.

3. Procédé selon la revendication 1 ou 2, pour lequel le facteur de correction est égal à 2.

4. Procédé selon l'une des revendications précédentes, pour lequel la détermination de la fraction volumique de gaz des bulles en suspension s'effectue sur la base de l'équation de Sorokin, selon laquelle il existe la relation suivante entre la vitesse du son $c_{S-mix}$ d'un liquide chargé de gaz et d'autres paramètres :

$$c_{S-mix} = \left[ \frac{\alpha_s}{c_g^2} + \frac{(1-\alpha_s)^2}{c_l^2} + \frac{\alpha_s(1-\alpha_s)\cdot\rho_l}{\gamma\cdot p} \right]^{-\frac{1}{2}},$$

   où $\alpha_s$ est une fraction volumique de gaz, $c_g$ est la vitesse du son du gaz pur, $c_l$ est la vitesse du son du liquide pur, $\gamma$ est le coefficient adiabatique pour le gaz, p est la pression réelle du liquide chargé de gaz et $\rho_l$ est la densité du liquide pur.

5. Procédé selon l'une des revendications précédentes, pour lequel la détermination de la valeur de densité de résonateur est effectuée sur la base des fréquences propres du mode de vibration de flexion F1 et du mode de vibration de flexion F2 ou du mode de vibration de flexion F3.

6. Procédé selon l'une des revendications précédentes, pour lequel le capteur comporte au moins deux tubes de mesure différents, pour lesquels des modes de vibration de flexion de même type présentent des fréquences propres différentes, la détermination de la valeur de densité de résonateur s'effectuant sur la base des fréquences propres différentes de deux modes de vibration de flexion de même type, notamment des deux modes de vibration de flexion F1 des différents tubes de mesure.

7. Procédé selon l'une des revendications précédentes, pour lequel une valeur de densité de la phase mixte est déterminée pour le fluide en fonction de la fraction volumique de bulles en suspension et de la fraction volumique de gaz de bulles libres.

8. Procédé selon la revendication 7, lequel procédé est réalisé au moins partiellement de manière itérative, la valeur de densité de la phase mixte, laquelle est déterminée dans une deuxième itération, étant utilisée à la place de la valeur de densité de résonateur pour déterminer la fraction volumique de gaz de bulles en suspension.

9. Procédé selon l'une des revendications précédentes, pour lequel au moins l'une des valeurs suivantes est fournie en tant que valeur mesurée : la valeur de densité de la phase mixte, la fraction volumique de gaz de bulles libres, la fraction volumique de gaz de bulles en suspension, et la somme des fractions volumiques de gaz susmentionnées.

**100**

110 — Bestimmen von Eigenfrequenzen zweier Biegeschwingungsmoden, und eines Druckmesswerts

120 — Bestimmen von vorläufigen
Dichtewerten

130 — Bestimmen der Schallgeschwindigkeit des
Mediums

140 — Bestimmen eines
Resonatordichtewerts.

150 — Bestimmen eines Gasvolumenanteils suspendierter
Blasen

160 — Bestimmen eines Misch-
phasendichtezwischenwerts

170 — Bestimmen eines Gasvolumenanteils freier
Blasen

180 — Bestimmen eines
wahren Mischphasendichtewerts

# Fig. 1

Fig. 2a

Fig. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018112002 A1
- DE 102016114974 A1
- DE 102016114972 A1
- DE 102017131267 A1